# EUROPÄISCHE PATENTANMELDUNG

(11) **EP 1 236 970 A1**
(43) Veröffentlichungstag der Anmeldung: **04.09.2002**
(21) Anmeldenummer: 02004160.4
(22) Anmeldetag: 26.02.2002
(51) Int. Cl.: G01B 11/25

(54) **Bilderverarbeitungssystem**

(30) Priorität: 26.02.2001 DE 10109231
(71) Anmelder: Leuze electronic GmbH + Co., 73277 Owen/Teck (DE)
(72) Erfinder: Hummernbrum, Falk, Dr., 73235 Weilheim/Teck (DE); Buhl, Alexander, 73277 Owen/Teck (DE)
(74) Vertreter: Ruckh, Rainer Gerhard, Dr.

(57) **Zusammenfassung**

Die Erfindung betrifft ein Bildverarbeitungssystem (1) mit jeweils wenigstens einer Lichtstrahlen (4) emittierenden Beleuchtungseinheit (2), einem Detektor (5) sowie einer Auswerteeinheit zur Auswertung der am Ausgang des Detektors (5) anstehenden Bildsignale. Zwischen der Beleuchtungseinheit (2) und dem Objekt (3) ist eine Projektionseinheit (7) angeordnet, in welcher den Lichtstrahlen (4) Beleuchtungsstrukturen aufgeprägt werden. In der Auswerteeinheit werden die durch Objektstrukturen induzierten Änderungen der Beleuchtungsstrukturen erfasst.

## Beschreibung

Die Erfindung betrifft ein Bildverarbeitungssystem gemäß dem Oberbegriff des Anspruchs 1.

Derartige Bildverarbeitungssysteme weisen wenigstens eine Lichtstrahlen emittierende Beleuchtungseinheit auf, mit welcher ein zu erfassendes Objekt beleuchtet wird. Die Beleuchtung erfolgt typischerweise nach dem Auflichtverfahren, bei welchem das Objekt mit den Lichtstrahlen beleuchtet wird und an der Oberfläche des Objektes reflektierte Lichtstrahlen über ein Objektiv auf eine Kamera gerührt werden, welche einen optoelektronischen Detektor bildet. Die Bildsignale der Kamera werden in einer der Kamera nachgeordneten Auswerteeinheit ausgewertet. Die Kamera ist beispielsweise von einer CCD-Kamera gebildet, die Auswerteeinheit besteht aus einem Prozessrechner oder dergleichen. Die Bildverarbeitung erfolgt mittels bekannter Verfahren der digitalen Bildverarbeitung.

Ein derartig ausgebildetes Bildverarbeitungssystem wird insbesondere zur Oberflächeninspektion von Objekten eingesetzt. Generell besteht dabei die Anforderung auch kleine Objektstrukturen wie zum Beispiel Defekte genau aufzulösen. Die Auflösung derartiger Bildverarbeitungssysteme ist jedoch durch die optischen Abbildungsparameter begrenzt.

Bei der Erfassung von Objektstrukturen glänzender und spiegelnder Objekte besteht weiterhin die Schwierigkeit, dass durch gerichtete spiegelnde Reflexionen von Lichtstrahlen in die Kamera diese übersteuert wird. Dies führt zu einer weiteren unerwünschten Einschränkung bei der Objektdetektion.

In der DE 100 26 301 A1 wird ein Verfahren zur Bildverarbeitung beschrieben, bei dem ein Objekt durch eine Vielzahl von Licht aussendenden Sendeelementen beleuchtet wird, das beleuchtete Objekt von einer Aufnahmeeinheit erfasst und das von der Aufnahmeeinheit erfasste Abbild des Musters ausgewertet wird. In einem Einlernvorgang werden nacheinander jeweils unterschiedliche Gruppen der Sendeelemente zum Aussenden von Licht angesteuert. Anhand von vorgegebenen Auswahlkriterien wird die Gruppe der Sendeelemente als Referenzgruppe bestimmt, bei deren Ansteuerung während des Einlernvorganges das für die Erkennung des Objekts am Besten geeignete Abbild erfasst wird. Nach Beenden des Einlernvorgangs werden zum Erfassen des eingelernten Objekts die Sendeelemente der Referenzgruppe angesteuert. Weiterhin wird eine Vorrichtung zur Durchführung des Verfahrens beschrieben.

Mit diesem Verfahren kann die von den Sendeelementen gebildete Beleuchtungseinheit so konfiguriert werden, dass bei der Detektion von Objekten unerwünschte, die Objektdetektion beeinträchtigende Schattenwürfe vermieden werden. Auch können bei der Detektion von spiegelnden Objekte die Objektdetektion beeinträchtigende spiegelnde Reflexionen im Detektor vermieden werden.

Jedoch ist auch bei diesem Verfahren die Objektdetektion bei kleinen Objektgeometrien in unerwünschter Weise eingeschränkt. Zudem erfordert die Durchführung des Einlernvorgangs einen erheblichen Zeitaufwand.

Der Erfindung liegt die Aufgabe zugrunde ein Bildverarbeitungssystem der eingangs genannten Art so auszubilden, dass mit diesem insbesondere kleine Objektstrukturen sicher erfassbar sind.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Das erfindungsgemäße Bildverarbeitungssystem weist jeweils wenigstens eine Lichtstrahlen emittierenden Beleuchtungseinheit, einen Detektor sowie eine Auswerteeinheit zur Auswertung der am Ausgang des Detektors anstehenden Bildsignale auf. Zwischen der Beleuchtungseinheit und dem Objekt ist eine Projektionseinheit angeordnet, in welcher den Lichtstrahlen Beleuchtungsstrukturen aufgeprägt werden. In der Auswerteeinheit werden die durch Objektstrukturen induzierten Änderungen der Beleuchtungsstrukturen erfasst.

Der Begriff Lichtstrahlen umfasst dabei nicht nur sichtbares Licht sondern generell elektromagnetische Strahlen, insbesondere auch UV- und InfrarotStrahlung.

Der Erfindung liegt die Erkenntnis zugrunde, dass zu detektierende Objektstrukturen wie zum Beispiel Defekte in Objektoberflächen zwar punktuell auftreten können und äußerst kleine Abmessungen aufweisen, die typischerweise im Bereich von 100 µm oder kleiner sind. Beispiele hierfür sind Korneinlagerungen in Gläsern, Spiegeln oder dergleichen. Diese Defekte führen zu geringfügigen Störungen der Objektoberfläche im Bereich um den jeweiligen Defekt, wobei diese Störungen sich über eine Länge bis in den ZentimeterBereich erstrecken können. Befindet sich beispielsweise auf einer Spiegeloberfläche während eines Beschichtungsvorgangs ein Staubkorn oder dergleichen, so entstehen bei der Beschichtung um das Staubkorn durch Spannungen und Verwerfungen geringe Unregelmäßigkeiten der Objektoberfläche im Bereich des Staubkorns. Die punktförmigen Defekte sind zu klein, um sie mit konventionellen Bildverarbeitungssystemen detektieren zu können. Die durch die Defekte induzierten Störungen der Objektoberfläche sind so gering, dass diese nicht sichtbar sind und mit konventionellen Bildverarbeitungssystemen ebenfalls nicht aufgelöst werden.

Bei dem erfindungsgemäßen Bildverarbeitungssystem werden den von der Beleuchtungseinheit emittierten Lichtstrahlen durch die Projektionseinheit Beleuchtungsstrukturen aufgeprägt. Diese sind vorzugsweise von Punkt-, Linienöder Flächenmustern mit Segmenten unterschiedlicher Lichtintensitäten gebildet, welche auf das Objekt abgebildet werden.

Die so erzeugte, im Detektor registrierte Abbildung ist äußerst empfindlich gegen Unregelmäßigkeiten auf der Objektoberfläche. Die durch einen Defekt in der Objektoberfläche erzeugten Störungen führen daher zu einer Verzerrung der Beleuchtungsstruktur, welche in dem Detektor eindeutig erfassbar ist.

Damit kann der Defekt detektiert werden, obwohl dieser selbst sowie die dadurch bewirkten Störungen nicht sichtbar sind und nicht direkt vom Bildverarbeitungssystem aufgelöst werden können.

Die Größen der Segmente der die Beleuchtungsstrukturen bildenden Flächenmuster können dabei signifikant größer als die Durchmesser der Defekte sein und liegen vorzugsweise in der Größenordnung der Ausdehnungen der durch die Defekte induzierten Störungen in der Objektoberfläche. Wesentlich hierbei ist zudem, dass die Segmente der Flächenmuster erheblich kleiner als die Objektoberfläche sind, so dass eine hinreichend große Anzahl von Segmenten auf der Objektoberfläche abbildbar ist.

Besonders vorteilhaft können mit dem erfindungsgemäßen Bildverarbeitungssystem Defekte in Gläsern und Spiegeln, insbesondere gewölbten Spiegeln wie zum Beispiel Rückspiegeln von Kraftfahrzeugen detektiert werden, wobei die Durchmesser der Defekte typischerweise in der Größenordnung von 100 µm liegen können. Die Defekte, die zum Beispiel von in den Spiegeln eingelagerten Staubkörnern oder dergleichen sein können, führen zu Oberflächenstörungen, deren Durchmesser bis zu einigen Zentimetern betragen kann.

Weiterhin kann das erfindungsgemäße Bildverarbeitungssystem zur Detektion von Defekten in Gläsern, Wafern oder dergleichen eingesetzt werden.

Ein weiterer Vorteil der Erfindung besteht darin, dass die auf das Objekt projizierten Beleuchtungsstrukturen unabhängig davon, ob die Objektoberfläche die Lichtstrahlen diffus oder spiegelnd reflektieren, in den Detektor abgebildet werden können. Damit können insbesondere auch bei glänzenden und spiegelnden Objekten Defekte geringer Größe sicher erfasst werden.

Die Erfindung wird im nachstehenden anhand der Zeichnungen erläutert. Es zeigen:
- Figur 1:: Schematische Darstellung einer ersten Konfiguration des erfindungsgemäßen Bildverarbeitungssystems.
- Figur 2:: Schematische Darstellung einer zweiten Konfiguration des erfindungsgemäßen Bildverarbeitungssystems.

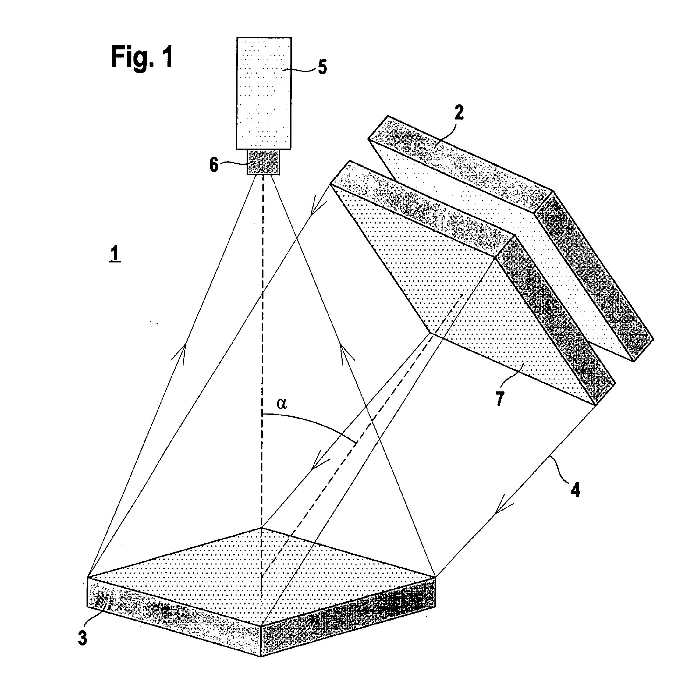

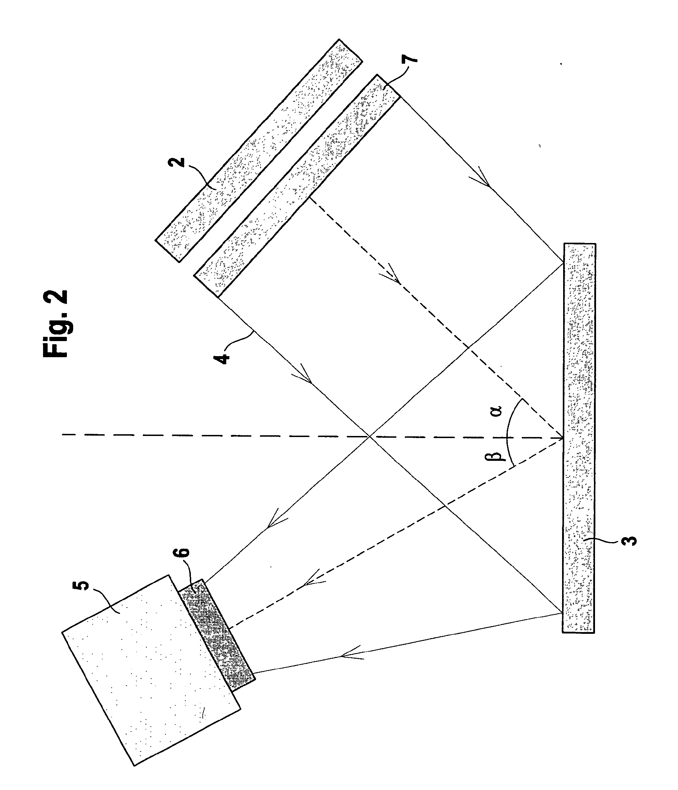

Die Figuren 1 und 2 zeigen zwei Konfigurationen des erfindungsgemäßen Bildverarbeitungssystems 1. In beiden Fällen weist das Bildverarbeitungssystem 1 eine Beleuchtungseinheit 2 auf, mittels derer ein zu erfassendes Objekt 3 ausgeleuchtet wird. Das Bildverarbeitungssystem 1 arbeitet im vorliegenden Fall nach dem Auflichtprinzip. Die von der Beleuchtungseinheit 2 emittierten Lichtstrahlen 4 treffen auf die Objektoberfläche und werden von dort auf einen Detektor 5 mit vorgeordnetem Objektiv 6 geführt. Die dadurch im Detektor 5 generierten Bildsignale werden in einer dem Detektor 5 nachgeordneten, nicht gesondert dargestellten Auswerteeinheit ausgewertet.

Die Beleuchtungseinheit 2 kann prinzipiell von einer punktförmigen Lichtquelle gebildet sein, welche ein divergentes Bündel von Lichtstrahlen 4 emittiert. Im vorliegenden Fall ist die Beleuchtungseinheit 2 als Flächenstrahler ausgebildet, dessen Querschnittsfläche vorzugsweise an die Fläche des zu detektierenden Objektes 3 angepasst ist.

Die Beleuchtungseinheit 2 kann als lichtemittierende Quellen LED-Arrays, hochfrequente Leuchtstoffröhren, Halogenstrahler oder Glühbirnen aufweisen. Besonders bevorzugt werden als lichtemittierende Quellen Laser eingesetzt.

Die lichtemittierenden Quellen werden zweckmäßigerweise mit hinreichend hohen Wechselspannungen betrieben, so dass im Detektor 5 ein flackerfreier Betrieb zur Auswertung der Bildsignale gewährleistet ist.

Die Wellenlängen der von der Beleuchtungseinheit 2 gerichtet auf das Objekt 3 geführten Lichtstrahlen 4 liegen bevorzugt im sichtbaren Bereich oder im Infrarot-Bereich. Dabei kann farbiges, monochromatisches, polarisiertes oder unpolarisiertes Licht verwendet werden. Prinzipiell können auch UV-Strahlung emittierende Beleuchtungseinheiten 2 vorgesehen werden.

Der Detektor 5 besteht aus einer Kamera, vorzugsweise einer CMOS- oder CCD-Kamera mit einer flächigen Anordnung von CMOS- oder CCD-Elementen. Die Kamera selbst, das dieser vorgeordnete Objektiv 6 und zweckmäßigerweise auch die Auswerteeinheit, die aus einem Mikroprozessorsystem oder dergleichen besteht, sind vorzugsweise in einem gemeinsamen Gehäuse angeordnet.

Bei den Konfigurationen gemäß den Figuren 1 und 2 wird das Bildverarbeitungssystem 1 zur Inspektion der Oberfläche des Objektes 3 eingesetzt. Das Objekt 3 ist in einer Objektebene platziert und wird von den Lichtstrahlen 4 vollständig ausgeleuchtet.

Bei der Ausführungsform gemäß Figur 1 wird mit dem Bildverarbeitungssystem 1 ein Objekt 3 inspiziert, welches eine diffus reflektierende Oberfläche aufweist. Die von der Beleuchtungseinheit 2 emittierten Lichtstrahlen 4, die auf das Objekt 3 geführt sind, weisen einen leicht konvergenten Strahlengang auf. Die Beleuchtungseinheit 2 ist oberhalb des Objektes 3 so angeordnet, dass die Strahlachse der Lichtstrahlen 4 in einem Einfallswinkel α zur Objektoberfläche verläuft. Der Detektor 5 ist oberhalb des Objektes 3 so angeordnet, dass die optische Achse des Detektors 5 senkrecht zur Objektoberfläche verläuft. Somit werden von der Objektoberfläche diffus reflektierende Lichtstrahlen 4 auf den Detektor 5 geführt.

Bei der Ausführungsform gemäß Figur 2 wird mit dem Bildverarbeitungssystem 1 ein Objekt 3 inspiziert, welches eine spiegelnd reflektierende Oberfläche aufweist. Die von der Beleuchtungseinheit 2 emittierten Lichtstrahlen 4, die auf das Objekt 3 geführt sind, weisen einen leicht konvergenten oder wie in Figur 2 dargestellt, einen parallelen Strahlengang auf. Die Beleuchtungseinheit 2 ist wiederum so angeordnet, dass die Strahlachse der Lichtstrahlen 4 in einem Einfallswinkel α zur Objektoberfläche verläuft.

Im Unterschied zum Ausführungsbeispiel gemäß Figur 1 ist im vorliegenden Beispiel der Detektor 5 oberhalb des Objektes 3 so angeordnet, dass dessen optische Achse in einem Ausfallswinkel β zur Objektoberfläche verläuft, welcher dem Einfallswinkel α entspricht. Auf diese Weise wird durch die spiegelnde Reflexion der Lichtstrahlen 4 die Beleuchtungseinheit 2 in den Detektor 5 abgebildet.

Das erfindungsgemäße Bildverarbeitungssystem 1 wird insbesondere zur Erfassung von Defekten in den Oberflächen der Objekte 3 eingesetzt. Die Objekte 3 sind dabei insbesondere von Spiegeln, wie zum Beispiel gekrümmten Spiegeln, die als Rückspiegel in Kraftfahrzeugen eingesetzt werden, gebildet. Weiterhin können die Objekte 3 von Gläsern, metallischen Gegenständen oder auch von Wafern gebildet sein.

Bei der Herstellung derartiger Objekte 3, insbesondere bei deren Oberflächenbearbeitung wie dem Aufbringen von spiegelnden Schichten können in die Oberflächen kleine Defekte wie Staubkörner oder dergleichen eingelagert werden. Derartige Defekte weisen Durchmesser von typischerweise 100 µm auf und können aufgrund ihrer geringen Größe nicht direkt mit dem Bildverarbeitungssystem 1 erfasst und sichtbar gemacht werden.

Jedoch induzieren derartige Defekte Störungen in der Objektoberfläche, die als Spannungen, Verwerfungen oder dergleichen ausgebildet sind und sich typischerweise über Bereiche mit Durchmessern von bis zu 1 cm um den Defekt erstrecken.

Da diese Störungen der Objektoberfläche äußerst geringfügig sind und damit nicht sichtbar sind, weist das erfindungsgemäße Bildverarbeitungssystem 1 eine der Beleuchtungseinheit 2 nachgeordnete Projektionseinheit 7 auf, mittels derer derartige Störungen nachgewiesen werden können.

Die Projektionseinheit 7 ist zwischen der Beleuchtungseinheit 2 und dem Objekt 3 angeordnet, wobei die Projektionseinheit 7 besonders bevorzugt wie in den Figuren 1 und 2 dargestellt, der Beleuchtungseinheit 2 unmittelbar nachgeordnet ist und mit dieser eine Baueinheit bildet.

Mittels der Projektionseinheit 7 werden den Lichtstrahlen 4 definierte Beleuchtungsstrukturen aufgeprägt, die auf das Objekt 3 abgebildet werden. Die Beleuchtungsstrukturen sind als Muster unterschiedlicher Lichtstärken ausgebildet, welche den von der Beleuchtungseinheit 2 emittierten, homogenen Lichtstrahlen 4 aufgeprägt werden und welche auf das Objekt 3 abgebildet werden.

Die Querschnittsfläche der Projektionseinheit 7 entspricht im Wesentlichen der Querschnittsfläche der als Flächenstrahler ausgebildeten Beleuchtungseinheit 2, so dass die von der Beleuchtungseinheit 2 emittierten Lichtstrahlen 4 mit ihrem gesamten Strahlquerschnitt über die Projektionseinheit 7 geführt sind. Die Projektionseinheit 7 besteht im vorliegenden Fall aus einer zumindest teiltransparenten Platte. Die Platte weist ein Flächenmuster mit Segmenten auf, welche unterschiedliche Transmissionskoeffizienten für die Lichtstrahlen 4 aufweisen.

Das Flächenmuster besteht dabei aus mehreren Gruppen von Segmenten, wobei die Segmente einer Gruppe jeweils denselben Transmissionskoeffizienten aufweisen. Die Anzahl der Gruppen kann je nach Anwendungsfall unterschiedlich ausgebildet sein. Wenigstens sind zwei unterschiedliche Gruppen vorgesehen, wie dies im vorliegenden Ausführungsbeispiel der Fall ist.

Die erste Gruppe von Segmenten weist einen hohen Transmissionskoeffizienten auf, während die zweite Gruppe von Segmenten einen geringeren Transmissionskoeffizienten aufweist. Entsprechend der Anordnung der unterschiedlichen Segmente der Projektionseinheit 7 wird auf der Objektoberfläche ein alternierendes Flächenmuster von hellen und dunklen Zonen abgebildet.

Im vorliegenden Fall weist das Flächenmuster eine schachbrettartige Struktur mit einer alternierenden Anordnung von quadratischen Segmenten mit großen und geringen Transmissionskoeffizienten auf. Derartige Flächenmuster können auch durch Projektionseinheiten 7 erzeugt werden, die aus einem LCD-Array mit LCD-Elementen unterschiedlicher Transmissionskoeffizienten bestehen.

Alternativ können die Flächenmuster auch in Form von Punktmustern, Gitterlinienmustern, Karomustern oder dergleichen gebildet sein.

Die Flächenmuster der Projektionseinheit 7 können durch Aufbringen von Ätzstrukturen, Bedruckungen oder Folien auf die Platte erzeugt werden.

Bei Durchsetzen der Projektionseinheit 7 wird den Lichtstrahlen 4 eine Beleuchtungsstruktur aufgeprägt, welche von einer dem Flächenmuster entsprechenden Anordnung von Zonen hoher und geringer Lichtintensitäten gebildet ist. Diese Beleuchtungsstruktur wird auf die Objektoberfläche projiziert und in den Detektor 5 abgebildet.

Die Größen der Segmente sind größer als die Durchmesser der auf der Objektoberfläche vorhandenen Defekte, jedoch erheblich kleiner als die Objektoberfläche. Besonders vorteilhaft sind die Größen der Segmente in der selben Größenordnung wie durch die Defekte induzierten Störungen in der Objektoberfläche. Diese durch Spannungen oder Verwerfungen in der Objektoberfläche hervorgerufenen Störungen bilden geringe Unregelmäßigkeiten in der Oberfläche, die bei der Reflexion der Lichtstrahlen 4 zu einer signifikanten Verzerrung der Beleuchtungsstrukturen führen, welche in dem Detektor 5 sicher erfasst werden können.

Obwohl die Störungen der Objektoberfläche nicht direkt sichtbar sind und somit auch nicht unmittelbar von dem Bildverarbeitungssystem 1 aufgelöst werden können, können diese indirekt durch die Verzerrungen der Beleuchtungsstrukturen sicher lokalisiert werden.

Die Lokalisierung und Klassifizierung der Defekte wird somit durch die Auswertung der Geometrien der Verzerrungen der Beleuchtungsstrukturen ermöglicht. Besonders vorteilhaft bei diesem Auswerteverfahren ist, dass auch spiegelnd reflektierende Objekte 3 mit großer Zuverlässigkeit auf Defekte untersuchbar sind, da mit der Anordnung gemäß Figur 2 die Beleuchtungsstrukturen auf der Objektoberfläche direkt in den Detektor 5 abgebildet werden, wodurch eine im Wesentlichen gleichmäßige Beleuchtungsstärke über die gesamte Detektorfläche erhalten wird, ohne dass einzelne Intensitätsspitzen zu einer Übersteuerung des Detektors 5 führen.

Generell wird die spezifische Beleuchtungsstruktur, die in der Projektionseinheit 7 generiert wird, applikationsspezifisch gewählt werden. Zur Anpassung an unterschiedliche zu erfassende Objektstrukturen kann in der Projektionseinheit 7 die jeweils generierte Beleuchtungsstruktur in geeigneter Weise auch zeitlich verändert werden. Beispielsweise kann in der Projektionseinheit 7 eine Umschaltung zwischen unterschiedlichen Beleuchtungsstrukturen erfolgen.

Das erfindungsgemäße Bildverarbeitungssystem 1 kann weiterhin besonders vorteilhaft zur Lagebestimmung von Objekten 3 eingesetzt werden. Dabei wird wie bei konventionellen Bildverarbeitungssystemen 1 die Objektoberfläche beleuchtet, wobei durch Auswertung der Bildsignale in der Auswerteeinheit die Orientierung des Objektes 3 bestimmbar ist.

Zusätzlich wird durch die in der Projektionseinheit 7 erzeugten Beleuchtungsstrukturen eine Tiefeninformation, das heißt eine Information über die Distanz des Objektes 3 zur Beleuchtungseinheit 2 erhalten. Hierzu wird eine Beleuchtungseinheit 2 verwendet, die Lichtstrahlen 4 mit einem konvergenten oder divergenten Strahlkegel emittiert. Durch die so erhaltenen Tiefeninformationen sowie die Bildinformationen des Objektes 3 kann die Lage des Objektes 3 im Raum bestimmt werden.

Die Divergenz- oder Konvergenzwinkel der Lichtstrahlen 4 sind als optische Parameter in der Auswerteeinheit abgespeichert. Je nach Entfernung des Objektes 3 zur Beleuchtungseinheit 2 werden dann die Beleuchtungsstrukturen der Lichtstrahlen 4 als Zonen unterschiedlicher Lichtintensität auf der Objektoberfläche abgebildet, deren Größen in eindeutiger Weise von der Distanz zur Beleuchtungseinheit 2 abhängen. Bei bekannter Position des Detektors 5 können daher aus den im Detektor 5 erfassten Größen der Zonen Informationen über die Objektdistanz abgeleitet werden.

Dabei kann insbesondere in der Auswerteeinheit eine kombinierte Auswertung vorgenommen werden. Aus den Größen der im Detektor 5 erfassten Zonen unterschiedlicher Lichtintensität wird die Objektdistanzinformation abgeleitet, während durch die Auswertung von Verzerrungen dieser Zonen zudem Defekte in der Objektoberfläche erfassbar sind.

### Bezugszeichenliste

- (1): Bildverarbeitungssystem
- (2): Beleuchtungseinheit
- (3): Objekt
- (4): Lichtstrahlen
- (5): Detektor
- (6): Objektiv
- (7): Projektionseinheit

## Patentansprüche

1. Bildverarbeitungssystem mit jeweils wenigstens einer Lichtstrahlen emittierenden Beleuchtungseinheit, einem Detektor sowie einer Auswerteeinheit zur Auswertung der am Ausgang des Detektors anstehenden Bildsignale, **dadurch gekennzeichnet, dass** zwischen der Beleuchtungseinheit (2) und dem Objekt (3) eine Projektionseinheit (7) angeordnet ist, in welcher den Lichtstrahlen (4) Beleuchtungsstrukturen aufgeprägt werden, und dass in der Auswerteeinheit die durch Objektstrukturen induzierten Änderungen der Beleuchtungsstrukturen erfasst werden.

2. Bildverarbeitungssystem nach Anspruch 1, **dadurch gekennzeichnet, dass** mittels der Projektionseinheit (7) dem Lichtstrahl (4) über seinen gesamten Strahlquerschnitt ein Flächenmuster mit Segmenten unterschiedlicher Lichtintensitäten aufgeprägt wird, welche die Beleuchtungsstrukturen bilden.

3. Bildverarbeitungssystem nach Anspruch 2, **dadurch gekennzeichnet, dass** das Flächenmuster schachbrettförmig, als Karomuster, als Punktmuster oder als Gitterlinienmuster ausgebildet ist.

4. Bildverarbeitungssystem nach einem der Ansprüche 1 - 3, **dadurch gekennzeichnet, dass** die Projektionseinheit (7) von einer Gitterstruktur mit Zonen unterschiedlicher Lichtdurchlässigkeit gebildet ist, welche von den Lichtstrahlen (4) durchsetzt werden.

5. Bildverarbeitungssystem nach Anspruch 4, **dadurch gekennzeichnet, dass** die Projektionseinheit (7) von einer lichtdurchlässigen Platte gebildet ist, wobei auf diese zur Erzeugung der Zonen unterschiedlicher Lichtdurchlässigkeiten Ätzstrukturen, Bedruckungen oder Folien aufbringbar sind.

6. Bildverarbeitungssystem nach Anspruch 4, **dadurch gekennzeichnet, dass** die Projektionseinheit (7) von einem LCD-Array mit Elementen vorgebbarer Lichttransmissionskoeffizienten gebildet ist.

7. Bildverarbeitungssystem nach einem der Ansprüche 1 - 6, **dadurch gekennzeichnet, dass** die Projektionseinheit (7) der Beleuchtungseinheit (2) unmittelbar nachgeordnet ist.

8. Bildverarbeitungssystem nach Anspruch 7, **dadurch gekennzeichnet, dass** die Projektionseinheit (7) und die Beleuchtungseinheit (2) eine Baueinheit bilden.

9. Bildverarbeitungssystem nach einem der Ansprüche 1 - 8, **dadurch gekennzeichnet, dass** die Beleuchtungseinheit (2) als lichtemittierende Quellen LED-Arrays, hochfrequente Leuchtstoffröhren, Halogenstrahler, Glühbirnen oder Laser aufweist.

10. Bildverarbeitungssystem nach einem der Ansprüche 1 - 9, **dadurch gekennzeichnet, dass** die Beleuchtungseinheit (2) als Flächenstrahler ausgebildet ist.

11. Bildverarbeitungssystem nach Anspruch 10, **dadurch gekennzeichnet, dass** der Querschnitt des Flächenstrahlers an die auszuleuchtende Fläche im Bereich des Objektes (3) angepasst ist.

12. Bildverarbeitungssystem nach einem der Ansprüche 1 - 11, **dadurch gekennzeichnet, dass** die Lichtstrahlen (4) in einem vorgegebenen Einfallswinkel (α) auf eine Objektebene geführt sind.

13. Bildverarbeitungssystem nach Anspruch 12, **dadurch gekennzeichnet, dass** bei der Detektion von diffus reflektierenden Objektoberflächen die optische Achse des Detektors (5) senkrecht zur Objektebene verläuft.

14. Bildverarbeitungssystem nach Anspruch 12, **dadurch gekennzeichnet, dass** bei der Detektion von spiegelnd reflektierenden Objektoberflächen die optische Achse des Detektors (5) in einem Ausfallswinkel (β) zur Objektebene verläuft, welcher dem Einfallswinkel (α) der Lichtstrahlen (4) entspricht.

15. Bildverarbeitungssystem nach einem der Ansprüche 1 - 14, **dadurch gekennzeichnet, dass** der Detektor (5) von einer Kamera, insbesondere einer CMOS-Kamera oder einer CCD-Kamera gebildet ist.

16. Bildverarbeitungssystem nach einem der Ansprüche 1 - 15, **dadurch gekennzeichnet, dass** mit diesem Defekte in einer Objektoberfläche erfassbar sind.

17. Bildverarbeitungssystem nach Anspruch 16, **dadurch gekennzeichnet, dass** die Objekte (3) von metallischen Gegenständen, Spiegeln oder Gläsern gebildet sind.

18. Bildverarbeitungssystem nach Anspruch 16, **dadurch gekennzeichnet, dass** die Objekte (3) von Wafern gebildet sind.

19. Bildverarbeitungssystem nach einem der Ansprüche 1 - 18, **dadurch gekennzeichnet, dass** die auf das Objekt (3) geführten Lichtstrahlen (4) einen vorgegebenen divergenten oder konvergenten Strahlengang aufweisen, wobei die Divergenz- oder Konvergenzwinkel der Lichtstrahlen (4) als optische Parameter in der Auswerteeinheit abgespeichert sind, und dass aus den Größen der auf das Objekt (3) projizierten und in den Detektor (5) abgebildeten Beleuchtungsstrukturen in der Auswerteeinheit ein Maß für eine räumliche Lage des Objektes (3) und/oder die Distanz vor der Objektoberfläche zur Beleuchtungseinheit (2) abgeleitet wird.
